(19) Europäisches Patentamt
European Patent Office
Office européen des brevets

(11) Numéro de publication: **0 507 362 A1**

# (12) DEMANDE DE BREVET EUROPEEN

(21) Numéro de dépôt: **92200508.7**

(51) Int. Cl.[5]: **C09C 1/28**, C01B 33/22

(22) Date de dépôt: **21.02.92**

(30) Priorité: **29.03.91 FR 9104001**

(43) Date de publication de la demande: **07.10.92 Bulletin 92/41**

(84) Etats contractants désignés: **AT BE CH DE DK ES FR GB GR IT LI LU MC NL PT SE**

(71) Demandeur: **TALC DE LUZENAC Société Anonyme**

**F-09250 Luzenac sur Ariege(FR)**

(72) Inventeur: **Clauss, Frédéric**
**10, rue Auguste Dide**
**F-31500 Toulouse(FR)**
Inventeur: **Baeza, Richard**
**1, rue de la Beauce**
**F-31100 Toulouse(FR)**
Inventeur: **Pietrasanta, Yves**
**14, place Méril Poujade**
**F-34140 Meze(FR)**
Inventeur: **Rousseau, Alain**
**8, rue Comte Bernard**
**F-34090 Montpellier(FR)**

(74) Mandataire: **Barre, Philippe**
**Cabinet Barre-Gatti-Laforgue 95 rue des Amidonniers**
**F-31069 Toulouse Cédex(FR)**

## (54) Substances talqueuses présentant des propriétés spécifiques de surface, procédés de farication et applications.

(57) L'invention concerne des substances talqueuses constituées de particules de structure feuilletée. Ces substances se caractérisent en ce que chaque particule présente intérieurement la structure cristalline du talc lui conférant certaines propriétés spécifiques de ce minéral (faible dureté, stabilité thermique) et possède des propriétés de surface hydrophiles s'opposant à celles hydrophobes du talc minéral et conduisant à une bonne réactivité. Les substances conformes à l'invention possèdent un domaine de stabilité thermique et chimique analogue à celui du talc. Elles peuvent être fabriquées par voie thermique ou voies chimiques dans des conditions propres à éviter la transformation interne du talc et à opérer des modifications de surface consistant en une substitution des ponts siloxanes inertes par des fonctions hydrophiles actives.

EP 0 507 362 A1

L'invention, due à la collaboration du Laboratoire de Chimie Appliquée de l'Ecole Nationale Supérieure de Chimie de Montpellier et de la Société Talc de Luzenac, concerne de nouvelles substances talqueuses présentant des propriétés spécifiques de surface et leur procédé de fabrication. Par la suite, on entend par "talc", le minéral silicate de magnésium hydraté, et par "substance talqueuse" une substance essentiellement constituée de silicate de magnésium hydraté, qui possède certaines propriétés caractéristiques du talc notamment le caractère feuilleté de sa structure, sa faible dureté et sa stabilité thermique et chimique. Il est à noter que le minerai de talc est fréquemment constitué par un mélange du minéral "talc" tel que ci-dessus défini et de minéraux associés : chlorite (silicate de magnésium et d'aluminium hydraté), dolomite (carbonate de calcium et de magnésium), etc... ; il est bien entendu que les substances talqueuses visées par la présente invention peuvent contenir les minéraux associés précités. L'invention s'étend à des applications des nouvelles substances fabriquées.

Le talc est un minéral qui possède de nombreuses applications industrielles : charge papetière, pigment de couchage du papier, adjuvant de contrôle des poix et résines du papier ("pitch control"), charge renforçante des thermoplastiques, charge pour peinture, adjuvant thixotropique, additif d'antimottage, support cosmétique, matière première dans la fabrication de céramiques... Toutefois le talc est un minéral hydrophobe et inerte, propriétés qui entraînent certains inconvénients dans certaines applications déjà existantes et peuvent en limiter le champ d'utilisation. Par exemple, dans les applications papetières, le caractère hydrophobe du talc complique les procédures de mélange en milieux aqueux et affaiblit sa liaison avec la cellulose, ce qui conduit au phénomène de poudrage (libération de talc en surface du papier) ; dans les applications comme charge des matières plastiques, le caractère inerte au talc empêche que celui-ci se lie fortement avec la matrice plastique, ce qui limite certaines propriétés mécaniques du composé chargé.

A l'heure actuelle, le procédé connu le plus courant pour masquer les caractères hydrophobe et inerte du talc consiste à encapsuler chaque particule au moyen d'une enveloppe présentant les propriétés désirées (GODARD P., MERCIER J-P. ; Double Liaison - Chimie des Peintures, (387) 3/19 (1988). TEMPLETON-KNIGHT R. ; Chemistry and Industry (August) 512 (1990)). Toutefois, un tel procédé peut masquer les autres propriétés du talc (lamellarité par exemple) ; de plus et surtout, l'absence de liaison chimique entre l'enveloppe et la particule de talc ne permet pas en général d'augmenter significativement les propriétés mécaniques finales par rapport à celles obtenues au moyen d'une charge de talc non encapsulé, et ce, d'autant plus que les enveloppes en matière synthétique généralement prévues sont fragiles et peu stables thermiquement. Le brevet EP-A-0.050.936 décrit un procédé d'enrobage au moyen d'un dépôt d'hydroxyde de magnésium obtenu par action sur du talc d'une solution aqueuse de soude à faible température (inférieure à 65° C et généralement à température ambiante) : le magnésium du talc est dissous dans la solution et précipite sous forme d'hydroxyde de magnésium sur les particules. Ce dépôt confère une hydrophilie apparente à la substance mais s'élimine très facilement par exemple par lavage acide, ultrasons... et l'on retrouve alors les particules initiales de talc hydrophobe. Comme précédemment, un tel produit n'a aucune stabilité.

De plus, les brevets GB-A-2 211 493 et JP-A-0.113.018 (Chemical Abstracts, vol. 111, n° 26, 25.12.1989, Columbus, Ohio, US, abstract n° 236090R, page 180) décrivent un procédé de traitement du talc par des composés phosphoriques tels que l' acide phosphorique ou pyrophosphorique. Ce procédé réalise un dépôt de phosphate autour des particules de talc, qui leur confère une hydrophilie apparente : comme précédemment, ce dépôt est instable et est facilement éliminé, notamment par lavage basique, ultrasons...

Dans les substances à hydrophilie apparente, décrites précédemment, le caractère hydrophobe du talc initial est simplement masqué par un dépôt périphérique qui n'est pas intégré à la structure cristalline du talc et qui peut être facilement déplacé ; dans ces conditions, l'on comprend que le caractère d'hydrophilie créé soit très labile et qu'il ne soit pas possible de greffer sur ce dépôt des molécules extérieures pour obtenir une particule globale présentant une bonne cohésion (dans laquelle les molécules extérieures soient liées de façon stable au talc).

Par ailleurs, dans le cas où le talc est utilisé comme charge de renforcement de matières thermoplastiques, on a constaté qu'une transformation thermique au talc en mélange d'enstatite et de silice conduisait à une charge stable augmentant significativement les propriétés mécaniques des thermoplastiques obtenus (voir brevets FR 2.527.620 et FR 2.585.691). Toutefois, une telle transformation (désignée "calcination") est très coûteuse en raison des hautes températures nécessaires (en pratique entre 1 150° C et 1 220° C) qui exigent une technologie spécifique (fours rotatifs à chauffage direct, lesquels s'imposent à partir de 900° C). De plus et surtout, cette transformation conduit à un produit différent qui n'est plus du talc et n'en a plus les propriétés (en particulier structure cristalline de grande dureté) : ce produit présente certaines caractéristiques spécifiques (notamment un caractère abrasif) qui en limitent les applications aux charges pour thermoplastiques.

La présente invention se propose de fournir un procédé de fabrication de nouvelles substances talqueuses stables constituées de particules qui présentent intérieurement la structure du talc et donc possèdent certaines propriétés caractéristiques de celui-ci telles que caractère feuilleté, faible dureté, stabilité thermique, tout en présentant des propriétés de surface modifiées, stables thermiquement et chimiquement : hydrophilie et/ou caractère réactif à l'égard d'un grand nombre de composés.

Un objectif de l'invention est de fournir des substances talqueuses du type précité, dont les particules soient homogènes, stables et résistantes aux agents extérieurs et conditions de mise en oeuvre (résistance thermique, résistance au cisaillement et résistance au solvant).

A cet effet, la substance talqueuse de base conforme à l'invention est constituée de particules de structure feuilletée. Chaque particule comprend des feuillets internes hydrophobes, possédant la structure cristalline du talc au niveau de chaque maille et liés entre eux par des forces ce cohésion typiques du talc (forces de Van der Waals) ; la substance conforme à l'invention se caractérise en ce que chaque particule comprend au moins un feuillet de surface hydrophile :

- constitué par un réseau de tétraèdres d'oxyde de silicium, portant ces sites hydrophiles,
- et lié aux feuillets internes par des forces de même nature que les forces de cohésion existant entre lesdits feuillets internes.

En particulier, lacite substance, qui peut être fabriquée à partir du talc par les procédés définis plus loin, est formée de particules dont les feuillets internes possèdent des fonctions hydrophiles silanol SiOH.

Ainsi, la substance talqueuse conforme à l'invention est formée de particules homogènes stables (par opposition aux particules encapsulées ou recouvertes d'un dépôt), qui conservent les caractéristiques essentielles du talc en raison de leur structure cristalline interne (caractère feuilleté, faible dureté, stabilité thermique) mais présentent des caractéristiques stables d'hydrophilie et une réactivité (par opposition à l'hydrophobie et l'inertie du talc) en raison des sites faisant partie de la structure des feuillets de surface.

La substance talqueuse conforme à l'invention peut en particulier être fabriquée par voie thermique en chauffant des particules de talc à une température inférieure à 900° C dans des conditions propres à éviter la transformation du talc en enstatite et à opérer une modification de surface consistant en une substitution des ponts siloxanes inertes en silanols actifs. Comme on le verra plus loin, ces conditions peuvent être obtenues en ajustant de façon appropriée le couple température/durée de traitement, pour engendrer les substitutions de surface sus-évoquées tout en évitant la transformation du talc en enstatite (transformation qui caractérise les procédés de calcination connus : brevets FR 2.527.620 et FR 2.585.691). Les analyses ont montré que le procédé de fabrication par voie thermique sus-défini engendrait une inversion en surface de certains tétraèdres d'oxyde de silicium constitutifs du talc, ayant pour effet d'orienter vers l'extérieur leur sommet actif et de rendre accessible le groupement actif silanol (SiOH) qui forme ledit sommet, et ce, tout en laissant intact tout le reste de la structure cristalline des particules. Ainsi, la substance talqueuse obtenue se caractérise en ce que chaque feuillet de surface est constitué par un réseau comportant :

- des tétraèdres d'oxyde de silicium ayant un arrangement cristallin identique à celui du talc, la base inerte desdits tétraèdres formant la surface du feuillet,
- des tétraèdres d'oxyde de silicium inversés par rapport aux précédents, lesdits tétraèdres inversés ayant un sommet actif situé au niveau de la surface du feuillet, formant une fonction silanol SiOH.

La substance talqueuse conforme à l'invention peut également être fabriquée par voie chimique ; selon un premier mode de mise en oeuvre par voie chimique, on met en suspension du talc en présence d'un amorceur radicalaire dans un milieu liquide solvant dudit amorceur et sécable par les radicaux produits par l'amorceur, dans des conditions propres à ouvrir des liaisons siloxanes en surface des particules et à les remplacer par des fonctions hydrophiles. Ce procédé est avantageusement mis en oeuvre :

- en utilisant un amorceur radicalaire constitué par au moins un des composés du groupe suivant : diazo, peroxyde, carboperoxyde, peracide, disulfure, thiourame, xanthogène, dérivé du tétraméthyléthane,
- en utilisant comme solvant soit un composé organique halogéné ou un mélange de composés organiques halogénés, soit un tiers solvant contenant un thiol sécable par les radicaux produits par l'amorceur,
- en chauffant la suspension à une température au moins égale à la température de décomposition de l'amorceur radiculaire en vue d'entretenir la réaction radicalaire dans le milieu.

Les analyses ont montré que le procédé chimique sus-défini permettait d'ouvrir en surface certaines liaisons siloxanes (inertes), probablement par attaque radicalaire sur les siliciums correspondants, et simultanément d'y fixer les fonctions hydrophiles. Ainsi, la surface talqueuse obtenue se caractérise en ce que chaque feuillet de surface comprend des liaisons siloxanes inertes caractéristiques du talc et des fonctions hydrophiles SiOH, SiX ou SiRX, où X est un halogène et R un chaînon organique, ces fonctions paraissant être disposées sur des siliciums adjacents en remplacement d'un pont siloxane du talc.

Un autre mode de mise en oeuvre par voie chimique consiste :

- à chauffer des particules de talc en autoclave à une température au moins égale à 150° C en présence d'eau et d'une base minérale soluble dans l'eau,
- à maintenir le milieu réactionnel en température dans l'autoclave pendant une durée adaptée pour engendrer l'hydrolyse d'une proportion prédéterminée de groupements siloxanes présents en surface des particules de talc,
- après refroidissement, à filtrer le milieu réactionnel pour en séparer la phase solide.

En particulier, ce mode de mise en oeuvre peut présenter les conditions opératoires suivantes :

- l'on met en suspension les particules de talc dans une solution d'hydroxyde alcalin de façon que le rapport du nombre de moles d'hydroxyde à la surface des particules soit supérieur à $10^{-4}$ mole/$m^2$,
- l'on porte le milieu réactionnel ainsi obtenu à une température comprise entre 150° C et 300° C dans l'autoclave,
- l'on maintient le milieu à sa température dans l'autoclave pendant au moins 45 minutes,
- après filtration, l'on neutralise la phase solide par lavages au moyen d'une solution acide, puis d'une solution neutre, et on sèche la substance talqueuse obtenue.

Par ailleurs, une variante du mode de mise en oeuvre précédent consiste :

- à chauffer des particules de talc en autoclave à une température au moins égale à 150° C en présence d'une base organique,
- à maintenir le milieu réactionnel en température dans l'autoclave pendant une durée adaptée pour engendrer l'hydrolyse d'une proportion prédéterminée de groupements siloxanes présents en surface des particules de talc,
- après refroidissement, à mettre le milieu en présence d'une solution acide et à filtrer le milieu réactionnel pour en séparer la phase solide.

Comme dans le procédé par attaque radicalaire, certaines liaisons siloxanes inertes sont ouvertes par attaque de la base à la température et à la pression de l'autoclave ; les fonctions hydrophiles qui se forment à partir des sites ainsi ouverts sont engendrées directement dans l'autoclave dans le cas d'une solution aqueuse de base minérale, ou postérieurement par hydrolyse acide dans le cas de la variante menée en milieu organique.

Les analyses physico-chimiques des substances talqueuses conformes à l'invention (qu'elles soient fabriquées par voie thermique ou par voies chimiques) ont montré qu'elles pouvaient être caractérisées par :

- un spectre de diffraction des rayons X, identique à celui du talc, exempt des pics caractéristiques de l'enstatite,
- un spectre infrarouge analogue à celui du talc, possédant en plus de faibles bandes caractéristiques des fonctions hydrophiles créées, en particulier bandes à 3747 $cm^{-1}$ des silanols,
- des isothermes d'adsorption de sondes polaires et/ou apolaires modifiées, induisant des diagrammes de distribution d'énergie de surface bimodale (méthode de RUDZINSKI - JAGIELLO, référence : J. Colloïd - Interface Sci, 48, 478, 1982),
- un indice de mouillabilité (indice de Stevens, référence : Farmaceut Tijdschrift. Belgie, 51(2), 150, 1974) compris entre 50 et 71,3 (exprimé en mJ par $m^2$),
- une stabilité des particules en présence d'une solution acide et d'une solution basique, identique à celle du talc.

Il convient de souligner que les caractéristiques de structure sont les mêmes que celles du talc (absence d'autres espèces cristallines telles que l'enstatite), alors que les caractéristiques de surface sont différentes, et ce, tout en ayant une substance constituée de particules homogènes et stables.

L'invention s'étend à des applications des substances talqueuses sus-définies, consistant à traiter celle-ci de façon à leur conférer une ou des propriétés de surface prédéterminées. Le procédé de traitement utilise les sites hydrophiles de surface de la substance (notamment fonctions silanol) et consiste à fixer sur ces sites des molécules ayant, d'une part, une fonction de fixation sur lesdits sites, et d'autre part, une ou des fonctions conférant la ou les propriétés désirées. L'on peut en particulier fixer sur les sites hydrophiles de surface des molécules des familles suivantes : époxy, isocyanate, acide organique, acide acrylique, alcool, chlorure d'acyle, anhydride, organosilane comprenant au moins un groupe hydrolisable (alcoxysilane, chlorosilane...) en vue d'obtenir une réactivité de surface de la substance à l'égard d'une matrice organique déterminée. Les groupements chimiques caractéristiques de ces familles ont la propriété de réagir avec le groupement silanol, créant ainsi une liaison forte avec la particule. Le choix du composé utilisé dans ces familles sera dicté par l'application envisagée ; par exemples, on choisira des composés comportant comme autres groupements réactifs :

- des groupements insaturés dans le cas d'un mélange avec des monomères appelés à polymériser

(matières plastiques, peintures...),

- des groupements hydroxyles dans le cas d'une incorporation au papier (alcool polyvinylique, résines cellulosiques...) ou d'une préparation cosmétique (polysilanols).

Un autre type d'application des substances talqueuses de l'invention consiste à fixer au moins un colorant sur les sites hydrophiles de surface en vue d'obtenir une charge minérale colorée ; le ou les colorants choisis le seront de façon à présenter une affinité avec les fonctions hydrophiles des substances talqueuses utilisées.

Une autre application consiste à fixer au moins un principe actif sur les sites hydrophiles de surface, en vue d'obtenir un produit actif ayant un support minéral. Ce procédé permet en particulier de préparer des produits pharmaceutiques ou cosmétologiques, dont le principe actif est véhiculé par un support minéral parfaitement accepté par les tissus vivants.

Une autre application consiste à fixer un oligomère ou polymère conducteur de l'électricité sur les sites hydrophiles de surface, en vue d'obtenir une substance minérale conductrice de l'électricité (en particulier : peinture ou matière plastique permettant l'écoulement des charges électrostatiques).

L'invention s'étend aux substances talqueuses obtenues après de tels traitements, se caractérisant par une structure interne des particules identique à celle du talc, avec en surface une ou des molécules fixées sur ses sites hydrophiles.

L'invention est illustrée par les exemples qui suivent en référence aux dessins annexés :

- les figures 1, 2, 3, 4, 5 et 6 sont des diagrammes comparatifs obtenus à l'exemple 1, respectivement spectre de diffraction des rayons X (figures 1, 2), spectre infrarouge (figures 3, 4, 5 : sur ces figures, on a porté en ordonnée l'absorbance en densité optique DO et en abscisse la longueur d'onde) et diagramme de distribution d'énergie d'adsorption de l'octane (figure 6),
- les figures 7a et 7b sont des schémas explicatifs de la structure interne et de la structure de surface de la substance talqueuse obtenue à l'exemple 1,
- la figure 8 est un diagramme fournissant les couples température/durée de traitement, obtenus à l'exemple 2,
- la figure 9 est un diagramme reliant l'indice de mouillabilité de Stevens (millijoule/$m^2$) au rapport quantité de soude/surface de talc, pour les substances obtenues à l'exemple 5,
- la figure 10 est un diagramme reliant cet indice de mouillabilité au nombre de fonctions silanols obtenu par unité de surface dans le cas des substances de l'exemple 5 (ce nombre étant mesuré par spectroscopie infrarouge et représenté par l'amplitude en densité optique de la bande d'absorption à 3747 $cm^{-1}$),
- les figures 11a et 11b sont des schémas explicatifs de la structure de surface, d'une part du talc initial, d'autre part de la substance talqueuse obtenue à l'exemple 5.

<u>Exemple 1</u> Préparation d'une substance talqueuse hydrophile par voie thermique

<u>Produit de départ</u>

Le produit de départ utilisé est un mélange désigné "Luzenac 00" contenant 90 % de talc (silicate de magnésium hydraté), 8 % de chlorite (silicate de magnésium et d'aluminium hydraté), 1 % de dolomite (carbonate de calcium et de magnésium) et 1 % de divers. Les caractéristiques granulométriques de ce produit sont les suivantes : diamètre de coupure D99 = 50 microns, diamètre moyen D50 = 10 microns ; son indice Stevens de mouillabilité est de 40 mJ/$m^2$, ce qui caractérise un produit hydrophobe.

Le spectre de diffraction de ce produit de départ est représenté à la figure 1 par le diagramme A ; on y reconnaît les pics caractéristiques du talc, de la chlorite et de la dolomite.

Le spectre infrarouge du produit est représenté à la figure 3 par le diagramme C.

Un diagramme de distribution d'énergie d'adsorption (calculé à partir de l'isotherme d'adsorption de l'octane à 70° C obtenu par chromatographie inverse en phase gazeuse puis traité selon la méthode de Rudzinski-Jagiello) est représenté à la figure 6 (courbe E). On observe un seul type de site d'adsorption faiblement peuplé, caractéristique du talc.

<u>Préparation</u>

Le produit de départ est disposé sans tassement dans une barquette de matériau réfractaire non polluant (fibres silico alumineuses). Cette barquette est placée pendant 30 minutes dans un four électrique à moufle à une température de 875° C. Le produit est ensuite refroidi à l'air libre jusqu'à 20° C.

Caractérisation de la substance talqueuse obtenue

Les caractéristiques granulométriques sont inchangées par rapport à celles du produit de départ, ce qui montre que les particules ne sont pas géométriquement modifiées. L'analyse thermopondérale permettant de déterminer la composition minéralogique montre que l'on retrouve 90 % de talc, mais que la chlorite et la dolomite sont transformées.

Le spectre de diffraction de la substance talqueuse est représenté à la figure 2 par le diagramme B ; ce diagramme coïncide avec celui du produit de départ (A) à l'exception des pics de la chlorite et de la dolomite qui ont disparu (à noter que le pic de faible amplitude à 14,2 Å correspond au résidu de déshydradatation de la chlorite). Ce diagramme caractérise la structure cristalline du talc, exempte d'enstatite. (A titre indicatif, les pics caractéristiques de l'enstatite ont été positionnés en ENS à la figure 2).

De façon analogue, le spectre infrarouge de la substance (diagramme D de la figure 4) caractérise une structure de talc pur, exempte d'enstatite.

A la figure 5 est fourni le diagramme infrarouge obtenu par soustraction du diagramme du talc initial (figure 3) au diagramme de la substance talqueuse obtenue (figure 4). Un agrandissement de la zone située aux environs de 3800 $cm^{-1}$ montre la présence d'un pic d'absorption à 3747 $cm^{-1}$ qui caractérise la présence de fonctions silanols.

Le diagramme de distribution d'énergie d'adsorption de la substance (diagramme F de la figure 6) présente une courbe bimodale, montrant la création d'au moins un nouveau type de site d'adsorption, les deux sites visibles étant fortement peuplés : la substance obtenue a donc des propriétés de surface radicalement différentes de celles du produit de départ.

L'indice de mouillabilité est de 71,3 $mJ/m^2$, ce qui caractérise un produit très hydrophile, qui est immédiatement mouillé par l'eau.

Les résultats ci-dessus rapportés montrent que la substance talqueuse obtenue présente de façon inattendue, à la fois les deux caractéristiques suivantes :

- une structure cristalline interne identique à celle du talc,
- des propriétés d'hydrophilie s'opposant à l'hydrophobie naturelle du talc.

Des mesures de dureté montrent que la dureté de la substance talqueuse reste faible (de l'ordre de celle du talc) ; en outre, des essais en température montrent que la stabilité thermique du talc se retrouve et que les propriétés d'hydrophilie sont elles-mêmes thermostables.

De plus, la substance talqueuse a été soumise à diverses agressions chimiques en vue d'en caractériser la stabilité.

En particulier, elle a été immergée dans un bain agité constitué par des solutions acides (acide chlorhydrique, acide sulfurique) et des solutions basiques (soude). Après des actions, la substance talqueuse a été rincée à l'eau, séchée dans une étude à 120° C et analysée. Les particules ont conservé la même structure, les feuillets de surface hydrophile n'ayant pas été affectés. De telles agressions ont été effectuées en variant les acides et les bases, leur concentration et les températures : on a pu constater, par comparaison, que la plage de stabilité de la substance talqueuse hydrophile de l'invention coïncide avec celle du talc initial.

L'interprétation de l'ensemble des résultats obtenus a permis de dessiner les schémas des figures 7a et 7b illustrant la structure interne et de surface de la substance. La figure 7a montre les tétraèdres d'oxyde de silicium qui constituent les feuillets internes de la substance : trois oxygènes $O_1$, $O_2$, $O_3$ forment la base d'un tétraèdre située en surface du feuillet. Un oxygène $O_4$ dans le plan inférieur forme le sommet opposé, un silicium étant positionné dans le tétraèdre. Ces feuillets internes sont liés entre eux par des forces de Van der Waals. La figure 7b montre un feuillet de surface d'une particule de la substance : certains tétraèdres sont inversés et présentent un sommet actif situé au niveau de la surface du feuillet, ce sommet étant constitué par un groupement hydroxyle OH lié au silicium du tétraèdre pour former une fonction silanol SiOH. Les feuillets de surface sont liés entre eux et aux feuillets internes par les mêmes forces de cohésion qui lient entre eux les feuillets internes (forces de Van der Waals).

Exemple 2 Conditions de préparation par voie thermique

Dans cet exemple, le produit de départ est le même que précédemment et les conditions de température et de durée sont amenées à évoluer afin de définir la plage d'obtention d'une substance talqueuse analogue à celle obtenue à l'exemple 1.

On a dessiné à la figure 8 le diagramme obtenu : la zone hachurée Z de ce diagramme fournit les couples température/durée, qui permettent d'obtenir les modifications de surface précitées sans altérer la structure cristalline interne du talc. En conditions trop sévères (zone G située au-dessus de la zone

hachurée Z), le talc est transformé en enstatite avec perte de ses propriétés internes (notamment lamellarité et faible dureté) ; en conditions trop douces (zone K située au-dessous de la zone hachurée), l'énergie transmise est trop faible pour assurer le basculement des tétraèdres et conférer des propriétés d'hydrophilie de surface significatives ; pour des durées inférieures à 10 mn, l'homogénéité en température de l'échantillon n'est pas assurée de façon satisfaisante. Au-delà de deux heures, la durée n'a plus d'influence, le produit n'évoluant plus : en pratique, pour des raisons économiques, on se limitera à des durées inférieures à deux heures.

Exemple 3 Préparation par voie chimique au moyen d'un amorceur radicalaire.

Le produit de départ est le même que celui de l'exemple 1 et cinq échantillons sont traités avec des quantités différentes d'amorceur radicalaire constitué par le peroxyde de benzoyle.

Le talc de chaque échantillon est mis en suspension dans du tetrachlorure de carbone contenant pour 100 grammes de talc :

- échantillon 0 : absence d'amorceur,
- échantillon 1 : 0,4 g d'amorceur,
- échantillon 2 : 1,6 g,
- échantillon 3 : 6,5 g,
- échantillon 4 : 25,5 g.

Chaque mélange ainsi constitué est placé dans un réacteur étanche, soumis à une agitation pendant 12 heures à 130° C ; la température de décomposition de l'amorceur est de 71° C (température de demi-vie à 10 heures).

Cette température de 130° C a été choisie au terme de plusieurs essais ponctuels pour permettre la décomposition de l'amorceur et l'entretien de la réaction radicalaire.

Les produits obtenus sont refroidis, extraits des réacteurs, filtrés et lavés au tétrachlorure de carbone. Les poudres sont séchées à l'étuve pendant 24 heures à 100° C.

Caractérisation des substances obtenues

- granulométrie : inchangée,
- composition minéralogique par analyse thermopondérale : inchangée,
- spectre de diffraction : inchangé (strictement identique à celui du produit de départ, ce qui montre que, par voie chimique, les minéraux associés : chlorite, dolomite... sont conservés),
- spectre infrarouge : présence des bandes caractéristiques des minéraux de départ (talc, chlorite...) avec pour les échantillons 1 à 4 la large bande caractéristique de l'eau (montrant le caractère hygroscopique des substances obtenues, à l'exception de l'échantillon 0),
- indice Stevens de mouillabilité :
  - 40 mJ/$m^2$ pour l'échantillon 0,
  - 55 mJ/$m^2$ pour les échantillons 1 à 4,
- stabilité à l'égard des agents acides ou basiques : identique à celle du talc.

Ces résultats montrent que l'échantillon 0 n'a subi aucune modification significative, cependant que les autres échantillons soumis à la réaction radicalaire présentent à la fois les trois caractéristiques suivantes :

- structure cristalline interne identique à celle du talc,
- propriétés d'hydrophilie de surface,
- propriétés d'hygroscopie.

Les mesures de dureté et des essais en température montrent que l'on retrouve la faible dureté du talc et sa stabilité thermique.

L'interprétation des résultats permet d'avancer le mécanisme de modification de surface suivant : les radicaux engendrés dans le milieu ouvrent certaines liaisons siloxanes des feuillets de surface des particules et ces liaisons sont remplacées par des liaisons hydrophiles, notamment dans l'exemple concerne : SiCl, $SiCl_3$ et SiOH (par hydrolyse des précédentes).

Exemple 4 Préparation par voie chimique en utilisant d'autres amorceurs radicalaires.

La préparation de l'exemple 3 concernant l'échantillon 1 a été reprise avec les amorceurs suivants, dans le même solvant :

- 2-2', azobis (isobutyronitrile) de la famille diazo,
- produit commercial "PERKADOX 16S" (marque déposée par la Société "AKZO") de la famille des

carboperoxydes.

Les résultats sont identiques à ceux de l'exemple 3 et les substances obtenues se caractérisent par une structure cristalline interne type talc + chlorite, des propriétés d'hydrophilie de surface, un caractère hygroscopique et une stabilité identique à celle du talc initial.

Exemple 5 Préparation par voie chimique au moyen d'une base minérale.

Produit de départ

Le produit de départ utilisé est un mélange désigné "Steamic OOS" (marque déposée par la Société demanderesse) contenant 78 % de talc, 21 % de chlorite, et 1 % de dolomite. Les caractéristiques granulométriques de ce produit sont les suivantes : diamètre de coupure D99 = 10 microns, diamètre moyen D50 = 1,9 micron ; sa surface spécifique très élevée est de 12 $m^2/g$ ; son indice Stevens de mouillabilité est de 45 $mJ/m^2$.

Préparation

Le produit de départ est mélangé dans une enceinte d'autoclave avec une solution aqueuse d'hydroxyde de sodium ; le rapport RP du nombre de moles d'hydroxyde à la surface des particules est amené à varier de 0 à $7.10^{-4}$ mole/$m^2$.

Chacune ces suspensions obtenues est traitée sous agitation dans l'autoclave dans les conditions suivantes :

- température : 160° C,
- pression obtenue dans l'autoclave : 6 bars,
- durée : 3 heures.

L'autoclave est ensuite refroidi jusqu'à la température ambiante et le milieu est filtré pour en séparer la phase solide, laquelle est lavée à l'acide chlorhydrique dilué (N/10), rincée à l'eau, puis séchée 24 heures à l'étuve à 120° C.

Caractéristiques des substances talqueuses obtenues

Les caractéristiques physiques (granulométrie, surface spécifique) des substances n'ont pas changées.

Le caractère d'hydrophilie a été caractérisé en mesurant l'indice de mouillabilité de Stevens, ce qui a permis de tracer la courbe de la figure 9 : la substance demeure hydrophobe jusqu'à des valeurs du rapport RP inférieures à $0{,}6.10^{-4}$ mole/$m^2$ ; le caractère d'hydrophilie croît ensuite entre $0{,}6.10^{-4}$ et $1{,}9.10^{-4}$ mole/$m^2$ ; au-delà de cette valeur, la substance est totalement et immédiatement mouillée par l'eau (indice de Stevens égal à 71). On peut considérer que la substance possède des propriétés hydrophiles en surface au-delà d'un rapport RP égal à $10^{-4}$ mole/$m^2$.

Par ailleurs, le diagramme de distribution d'énergie d'absorption est identique à celui de la substance hydrophile de l'exemple 1. Le spectre de diffraction de ces substances talqueuses est identique à celui du produit de départ. Les spectres infrarouges sont semblables à celui du produit de départ, à l'exception du pic caractéristique des silanols à 3747 $cm^{-1}$ : l'amplitude de ce pic varie pour les substances talqueuses en fonction du rapport RP. Une mesure par spectroscopie infrarouge de l'amplitude de ce pic a permis de tracer le diagramme de la figure 10 reliant l'amplitude en densité optique DO et la mouillabilité. Les propriétés hydrophiles obtenues sont directement reliées au nombre de fonctions silanol formées au cours du procédé.

L'interprétation de l'ensemble des résultats obtenus a permis de dessiner les schémas des figures 11a et 11b. La figure 11a illustre en vue de dessus le réseau d'oxygènes de la surface du talc initial hydrophobe (réseau hexagonal classique). La figure 11b illustre la surface de la substance talqueuse hydrophile obtenue (RP > $10^{-4}$ mole/$m^2$). Les oxygènes $O_5$ et $O_6$ du talc initial ont respectivement été remplacés par les hydroxyles $(OH)_1$ et $(OH)_2$. La substitution s'effectue grâce à l'ouverture de ponts siloxane, par le mécanisme réactionnel suivant :

étape en autoclave $\equiv Si - O - Si \equiv + NaOH \rightarrow \equiv Si - ONa + HO - Si \equiv$

neutralisation $\equiv Si - ONa + HCl \rightarrow \equiv Si - OH + NaCl$

La stabilité des substances hydrophiles obtenues à cet exemple est identique à celle du talc initial. Les feuillets de surface pourvus des fonctions silanol sont liés aux feuillets intérieurs par des forces de Van der

Waals.

Exemple 6 Préparation analogue à celle de l'exemple 5 en faisant varier la température et la durée de traitement à l'autoclave.

Dans cet exemple, un produit de départ identique à celui de l'exemple 5 est soumis au même traitement avec un rapport RP = $2.10^{-4}$ mole/$m^2$, en faisant varier d'une part la température entre 80° C et 300° C, d'autre part la durée du traitement à l'autoclave entre 45 minutes et 15 heures (expériences croisées).

Les résultats montrent que :

- en-dessous de 150° C, l'on obtient des indices de mouillabilité caractéristiques d'un produit hydrophobe ou moyennement hydrophobe (indice entre 45 et 55),
- au-dessus de 160° C, l'on obtient un indice égal à 71, caractéristique d'un produit stable hydrophile (la durée étant supérieure à 45 minutes, durée qui paraît constituer le minimum nécessaire à l'obtention d'une température homogène et à la mise en oeuvre de la réaction dans l'autoclave),
- entre 150° C et 160° C, l'indice varie en fonction de la curée et devient égal à 71 pour des durées supérieures à 5 heures.

En pratique, l'on se fixera à une température supérieure à 150° C (par exemple 160° C) pendant une durée supérieure à 45 minutes (par exemple 2 à 3 heures pour 160° C). Il est à noter que, au-dessous de 150° C, l'on obtient des substances ayant un certain caractère hydrophile grâce à des dépôts s'opérant sur les particules ; toutefois, ce caractère disparait par lavage acide (dissolution des dépôts alcalins).

Exemple 7 Préparation par voie chimique au moyen d'une base organique.

Dans cet exemple, le produit de départ est identique à celui de l'exemple 6 et les conditions du traitement sont les suivantes :

- température = 160° C,
- durée = 3 heures,
- base = méthanolate de sodium en solution dans du méthanol,
- rapport RP = $2.10^{-4}$ mole/$m^2$.

Après refroidissement, la phase solide est séparée par filtration et lavée au méthanol pour éliminer les réactifs en excès. La phase solide est ensuite neutralisée à l'acide chlorhydrique dilué (N/10), relavée à l'eau, puis séchée à l'étuve à 120° C pendant 12 heures.

La substance talqueuse obtenue est hydrophile (indice de Stevens égal à 71), stable et présente les mêmes caractéristiques que les substances hydrophiles conformes à l'invention obtenues aux exemples 5 ou 6.

Exemple 8 Traitement des substances obtenues par un chlorosilane

La substance talqueuse obtenue par voie thermique à l'exemple 1 est traitée de la façon suivante :

- mise en suspension de la substance dans un solvant (tetrahydrofurane),
- addition de 95 g de diméthylchlorosilane pour 100 g de substance talqueuse,
- agitation et maintien à la température de 40° C pendant 12 heures,
- filtration et lavage au tétrahydrofurane (THF) de la poudre obtenue,
- purification par extraction au "SOXHLET" (marque déposée) pendant 48 heures dans du THF,
- séchage pendant 24 heures à l'étuve à 100° C.

La substance talqueuse obtenue est ensuite caractérisée et les résultats montrent que des groupements Si $H(CH_3)_2$ sont fixés sur les sites silanol de la substance hydrophile de départ :

- indice Stevens ce mouillabilité : 27 mJ/$m^2$ (caractéristique d'un recouvrement des sites hydrophiles par des groupements très hydrophobes $CH_3$),
- spectre infrarouge indiquant la présence de liaisons $CH_3$ (2 967 $cm^{-1}$) et SiH (2 148 $cm^{-1}$).

Les substances obtenues, mises en suspension dans les solvants habituels des chloro-silanes (tétrahydrofurane, acétone, éther) ne sont pas altérées et gardent leur nouvelle propriété de surface, ce qui démontre une liaison forte entre la substance talqueuse hydrophile de départ et les molécules greffées.

En outre, les greffons ne sont pas hydrolisés par l'eau.

Il est à noter que le traitement décrit au présent exemple sur la substance talqueuse hydrophile a été réalisé à titre comparatif sur du talc naturel hydrophobe et aucun greffage significatif n'a pu être obtenu.

Exemple 9 Traitement par un alcool

La procédure opératoire de l'exemple 8 a été reprise au moyen d'un alcool (isobutanol pur, température de traitement : 108° C, durée : 6 heures, solvant d'extraction : acétone) et a conduit à une substance talqueuse possédant en surface des groupements hydrophobes $C(CH_3)_3$ fixés sur les sites silanol de la substance hydrophile de départ (fabriquée à l'exemple 1).

L'indice de mouillabilité est de 27 $mJ/m^2$ comme dans l'exemple précédent et le spectre infrarouge indique la présence de liaisons $CH_3$ (2 967 $cm^{-1}$).

Exemple 10 Traitement par un organosilane

Les substances talqueuses hydrophiles obtenues aux exemples 1 et 5 (RP = $2.10^{-4}$ $mole/m^2$) sont traitées au moyen d'un organosilane (tridécafluoro-1,1,2,2-tétrahydrooctyl 1-diméthylchlorosilane, noté $C_6F_{13}$) selon le mode opératoire suivant :

- mise en suspension de la substance dans un solvant (tétrahydrofurane),
- addition de $10^{-2}$ mole de $C_6F_{13}$ pour 100 g de substance talqueuse,
- agitation et maintien à la température de 50° C pendant 5 heures,
- filtration et lavage au tétrahydrofurane (THF) de la poudre obtenue,
- purification par extraction au "SOXHLET" pendant 48 heures dans du THF,
- séchage pendant 24 heures à l'étuve à 100° C.

Les substances talqueuses présentent un indice de mouillabilité de 27 $mJ/m^2$ ; par spectroscopie de surface induite par photo-électron ("ESCA"), on observe la fixation en surface des particules, de groupements organiques fluorés.

Aucun greffage significatif de groupements fluorés ne peut être obtenu par un traitement analogue sur du talc naturel hydrophobe.

Exemple 11 Fixation d'un principe actif

Le mode opératoire de l'exemple 10 est mis en oeuvre sur les mêmes substances talqueuses hydrophiles en vue de réaliser un traitement au moyen :

(a) d'ascorbate de mono-méthylsilanetriol vendu par la Société "EXSYMOL" (Monaco), ou

(b) d'hydroxyprolénate de mono-méthylsilanetriol vendu par la même société.

Les substances talqueuses obtenues sont analysées par spectroscopie infrarouge, et portent en surface des greffons possédant les groupements caractéristiques de l'ascorbate ($C_6H_7O_5$) dans le cas (a) et de l'hydroxyprolénate ($C_5H_8NO_2$) dans le cas (b).

Ces substances dotées de ces principes actifs peuvent être utilisées en cosmétique de soin (effet antivieillissement de la peau).

Exemple 12 Fixation d'un colorant

Le mode opératoire de l'exemple 10 est mis en oeuvre sur les mêmes substances talqueuses hydrophiles en vue de réaliser un traitement au moyen de :

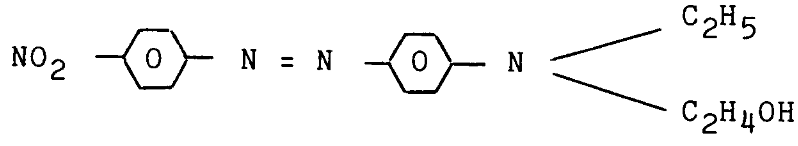

(nom commercial "RED1", marque déposée, commercialisé par la Société ALDRICH).

Les substances talqueuses obtenues sont rouges comme le colorant de base ayant servi au traitement. On obtient ainsi un pigment coloré facile à disperser, qui possède un pouvoir colorant plus fort, à quantité de colorant égale, et qui bénéficie de toutes les propriétés renforçantes des charges talqueuses. Cette substance peut en particulier être utilisée comme charge de papiers ou matières plastiques pour les teinter dans la masse.

**Revendications**

1. Substance talqueuse constituée de particules de structure feuilletée, chaque particule comprenant des feuillets internes hydrophobes, possédant la structure cristalline du talc au niveau de chaque maille et liés entre eux par des forces de cohésion typiques du talc (forces ce Van der Waals), ladite substance talqueuse étant caractérisée en ce que chaque particule comprend au moins un feuillet de surface hydrophile :
   - constitué par un réseau de tétraèdres d'oxyde de silicium, portant des sites hydrophiles,
   - et lié aux feuillets internes par des forces de même nature que les forces de cohésion existant entre lesdits feuillets internes.

2. Substance talqueuse selon la revendication 1, caractérisée en ce que les sites hydrophiles de chaque feuillet de surface sont constitués par des fonctions silanol SiOH.

3. Substance talqueuse selon la revendication 2, caractérisée en ce que chaque feuillet de surface est constitué par un réseau comportant :
   - des tétraèdres d'oxyde de silicium ayant un arrangement cristallin identique à celui du talc, la base inerte desdits tétraèdres formant la surface du feuillet,
   - des tétraèdres d'oxyde de silicium inversés par rapport aux précédents, lesdits tétraèdres inversés ayant un sommet actif situé au niveau de la surface du feuillet, formant une fonction silanol SiOH.

4. Substance talqueuse selon la revendication 1, caractérisée en ce que chaque feuillet de surface comprend des groupements siloxanes inertes caractéristiques du talc et des fonctions hydrophiles SiOH, SiX ou SiRX, où X est un halogène et R un chaînon organique.

5. Substance talqueuse selon la revendication 4, caractérisée en ce que chaque feuillet de surface est constitué par un réseau comportant :
   - des groupements siloxanes inertes de caractéristiques identiques à ceux présents dans le talc,
   - des fonctions silanols SiOH appariées deux par deux, provenant de l'ouverture de groupements siloxanes.

6. Substance talqueuse constituée de particules lamellaires, se caractérisant à la fois par :
   - un spectre de diffraction des rayons X, identique à celui du talc, exempt des pics caractéristiques de l'enstatite,
   - un spectre infrarouge identique à celui du talc, possédant en plus de faibles bandes caractéristiques de fonctions hydrophiles,
   - des isothermes d'adsorption de sonde polaire et/ou apolaire modifiées, induisant des diagrammes de distribution d'énergie de surface bimodale (méthode de Rudzinski-Jagiello),
   - un indice de mouillabilité (indice de Stevens) compris entre 50 et 71,3 (exprimé en mJ par $m^2$),
   - une stabilité des particules en présence d'une solution acide et d'une solution basique identique à celle du talc.

7. Procédé de fabrication d'une substance talqueuse conforme à l'une des revendications 3 ou 6, consistant à chauffer des particules de talc, caractérisé en ce que l'on porte lesdites particules de talc à une température inférieure à 900° C dans des conditions propres à éviter la transformation du talc en enstatite et à opérer une modification de surface consistant en une substitution des groupements siloxanes inertes en silanols actifs.

8. Procédé selon la revendication 7, caractérisé en ce que l'on porte lesdites particules de talc à une température comprise entre 800° C et 900° C pendant une durée au moins égale à 10 minutes de façon que le couple température/durée soit situé dans la zone hachurée Z du diagramme de la figure 8.

9. Procédé de fabrication d'une substance talqueuse conforme à l'une des revendications 5 ou 6, caractérisé en ce qu'il consiste :
   - à chauffer des particules de talc en autoclave à une température au moins égale à 150° C en présence d'eau et d'une base minérale soluble dans l'eau,
   - à maintenir le milieu réactionnel en température dans l'autoclave pendant une durée adaptée pour engendrer l'hydrolyse d'une proportion prédéterminée de groupements siloxanes présents en surface des particules de talc,

- après refroidissement, à filtrer le milieu réactionnel pour en séparer la phase solide.

**10.** Procédé de fabrication selon la revendication 9, caractérisé en ce que :
- l'on met en suspension les particules de talc dans une solution d'hydroxyde alcalin de façon que le rapport du nombre de moles d'hydroxyde à la surface des particules soit supérieur à $10^{-4}$ mole/$m^2$,
- l'on porte le milieu réactionnel ainsi obtenu à une température comprise entre 150° C et 300° C dans l'autoclave,
- l'on maintient le milieu à sa température dans l'autoclave pendant au moins 45 minutes,
- après filtration, l'on neutralise la phase solide par lavages au moyen d'une solution acide, puis d'une solution neutre, et on sèche la substance talqueuse obtenue.

**11.** Procédé de fabrication d'une substance talqueuse conforme à l'une des revendications 5 ou 6, caractérisé en ce qu'il consiste :
- à chauffer des particules de talc en autoclave à une température au moins égale à 150° C en présence d'une base organique,
- à maintenir le milieu réactionnel en température dans l'autoclave pendant une durée adaptée pour engendrer l'hydrolyse d'une proportion prédéterminée de groupements siloxanes présents en surface des particules de talc,
- après refroidissement, à mettre le milieu en présence d'une solution acide et à filtrer le milieu réactionnel pour en séparer la phase solide.

**12.** Procédé de fabrication d'une substance talqueuse conforme à l'une des revendications 4 ou 6, caractérisé en ce que l'on met en suspension du talc en présence d'un amorceur radicalaire dans un milieu liquide solvant dudit amorceur et sécable par les radicaux produits par l'amorceur, dans des conditions propres à ouvrir des liaisons siloxanes en surface des particules et à les remplacer par des fonctions hydrophiles.

**13.** Procédé selon la revendication 12, caractérisé en ce que :
- l'on utilise un amorceur radicalaire constitué par au moins un des composés du groupe suivant : diazo, peroxyde, carboperoxyde, peracide, disulfure, thiourame, xanthogène, dérivé de tétraméthyléthane,
- l'on utilise comme solvant soit un composé organique halogéné ou un mélange de composés organiques halogénés, soit un tiers solvant contenant un thiol sécable par les radicaux produits par l'amorceur,
- l'on chauffe la suspension à une température au moins égale à la température de décomposition de l'amorceur radiculaire en vue d'entretenir la réaction radicalaire dans le milieu.

**14.** Procédé de traitement d'une substance talqueuse conforme à l'une des revendications 1, 2, 3, 4, 5 ou 6, pour conférer à ladite substance une ou des propriétés de surface prédéterminées, caractérisé en ce que l'on fixe sur les sites hydrophiles de surface de la substance, des molécules ayant, d'une part, une fonction de fixation sur ces sites, et d'autre part, une ou des fonctions conférant la ou les propriétés désirées.

**15.** Procédé de traitement selon la revendication 14 en vue de conférer à la substance une réactivité de surface à l'égard d'une matrice organique déterminée, caractérisé en ce que l'on fixe sur les sites hydrophiles de surfaces, des molécules ayant une ou des fonctions qui possèdent une affinité avec la matrice organique précitée.

**16.** Procédé de traitement selon la revendication 15, caractérisé en ce que l'on fixe sur les sites hydrophiles de surface constitués par les groupements silanol, des molécules des familles suivantes : époxy, isocyanate, acide organique, acide acrylique, alcool, chlorure d'acyle, anhydride, organosilane comprenant au moins un groupe hydrolisable.

**17.** Procédé de traitement selon la revendication 14 en vue d'obtenir une charge minérale colorée, caractérisé en ce que l'on fixe sur les sites hydrophiles de surface, au moins un colorant.

**18.** Procédé de traitement selon la revendication 14 en vue d'obtenir un produit actif ayant un support

minéral, caractérisé en ce que l'on fixe sur les sites hydrophiles de surface, au moins un principe actif.

**19.** Procédé de traitement selon la revendication 14 en vue d'obtenir une substance minérale conductrice de l'électricité, caractérisé en ce que l'on fixe sur les sites hydrophiles de surface, un oligomère ou polymère conducteur de l'électricité.

**20.** Substance talqueuse traitée par le procédé conforme à l'une des revendications 14 à 19, présentant intérieurement la structure du talc et possédant en surface une ou des molécules fixées sur ses sites hydrophiles.

Fig 1

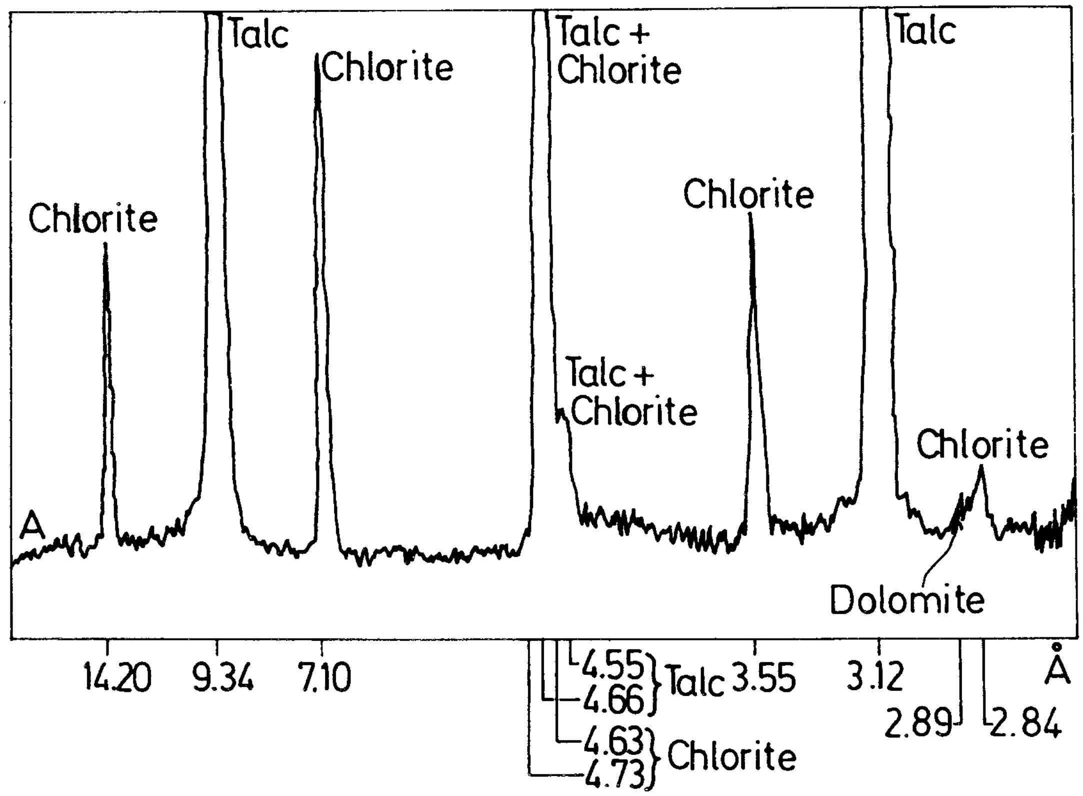
Talc
Chlorite
Talc +
Chlorite
Talc
Chlorite
Chlorite
Talc +
Chlorite
Chlorite
A
Dolomite
14.20
9.34
7.10
4.55
4.66
Talc
3.55
3.12
Å
2.89
2.84
4.63
4.73
Chlorite

Fig 2

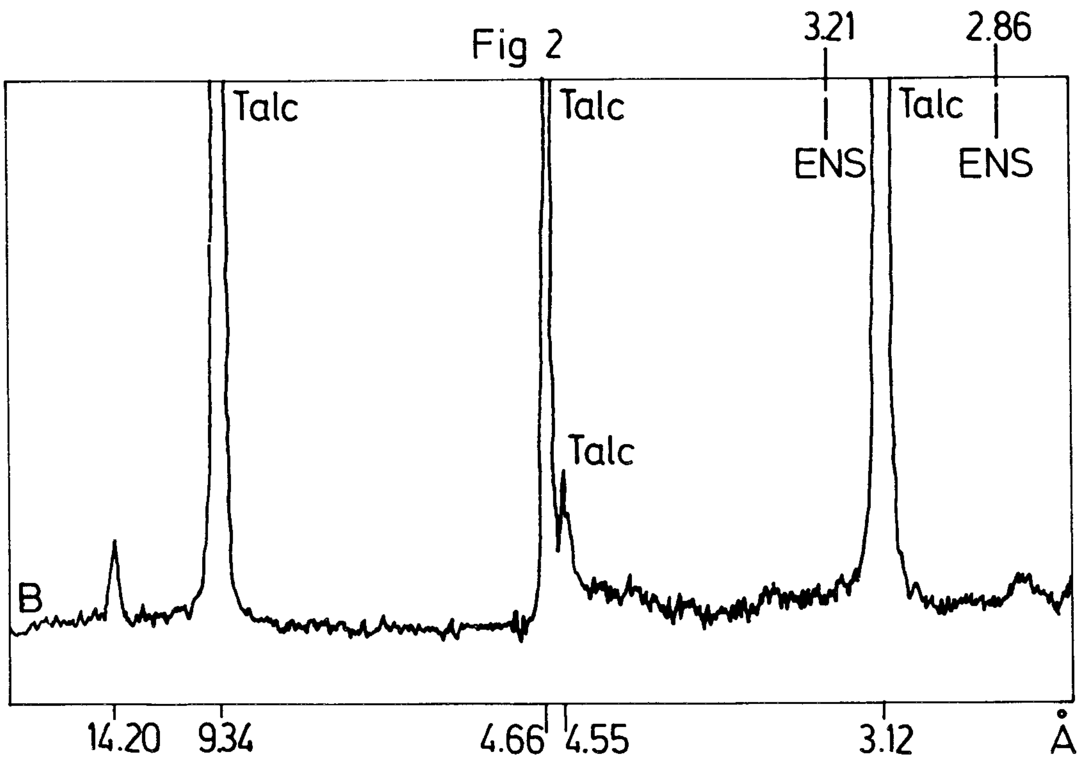
3.21
2.86
Talc
Talc
Talc
ENS
ENS
Talc
B
14.20
9.34
4.66
4.55
3.12
Å

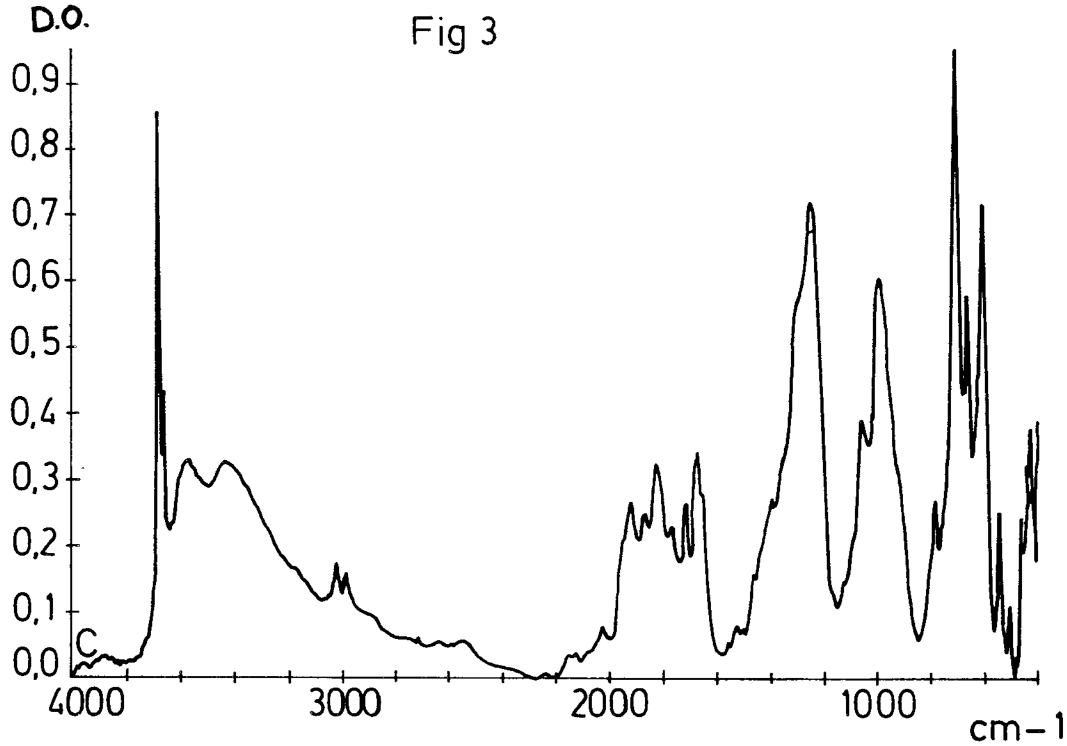
D.O.
Fig 3
0,9
0,8
0,7
0,6
0,5
0,4
0,3
0,2
0,1
0,0
C
4000
3000
2000
1000
cm-1

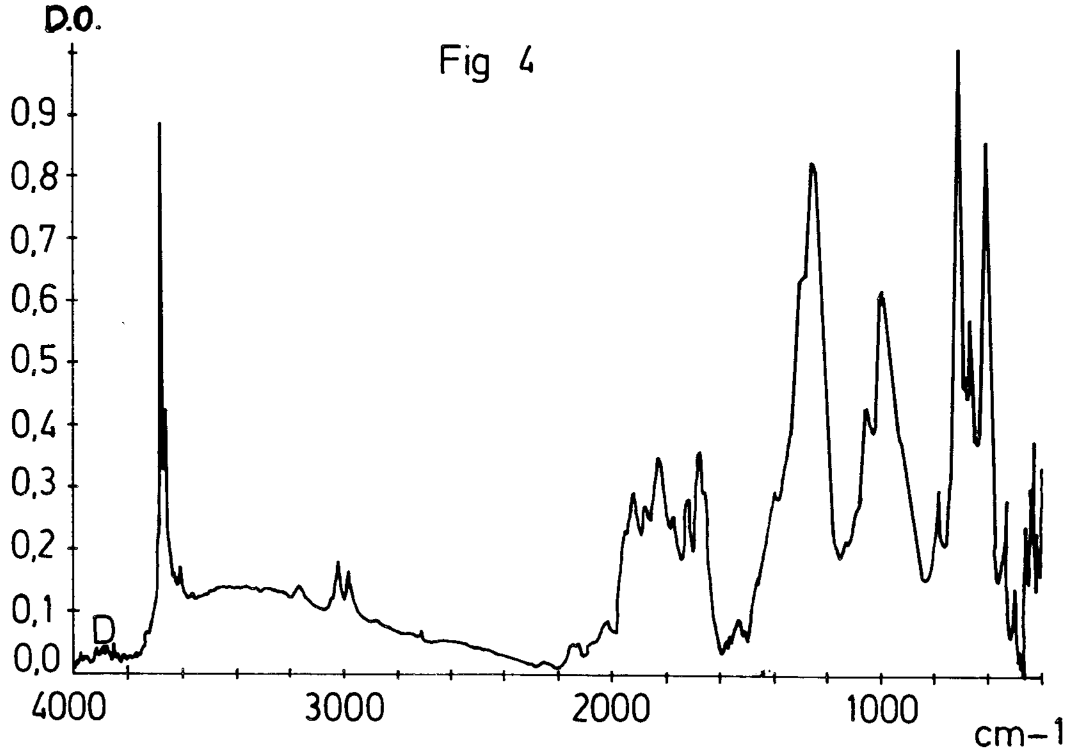
D.O.
Fig 4
0,9
0,8
0,7
0,6
0,5
0,4
0,3
0,2
0,1
0,0
D
4000
3000
2000
1000
cm-1

Fig 5

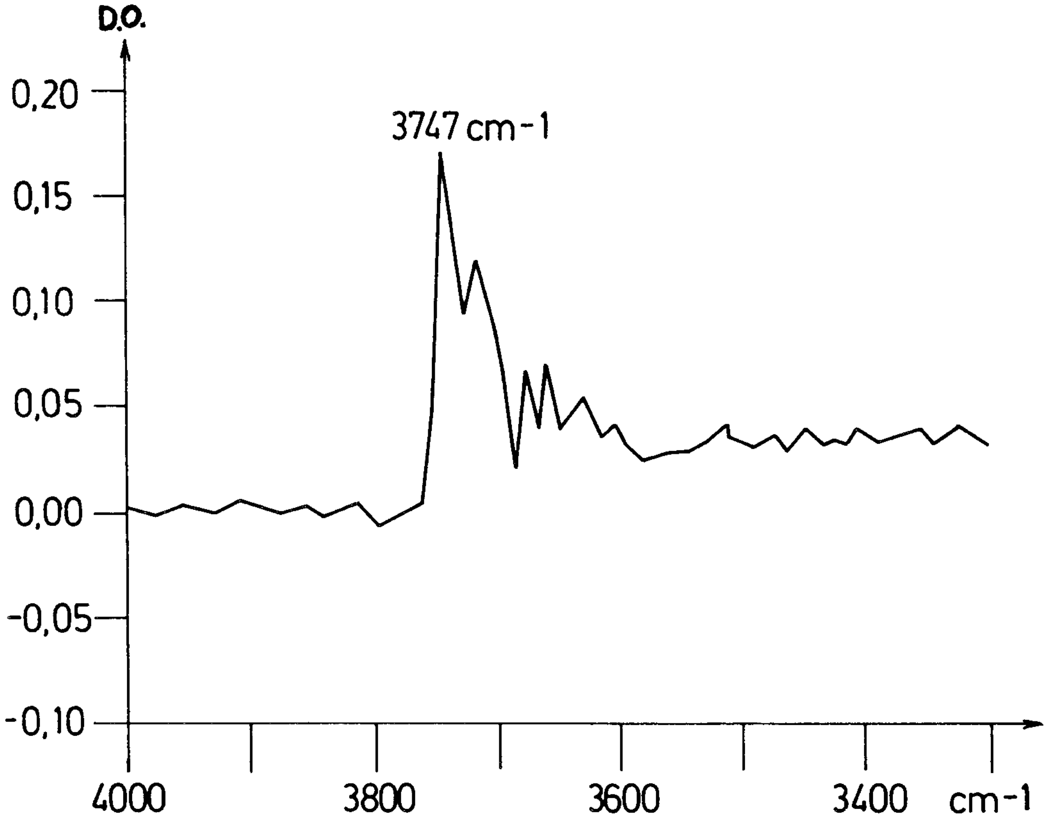

Fig 6

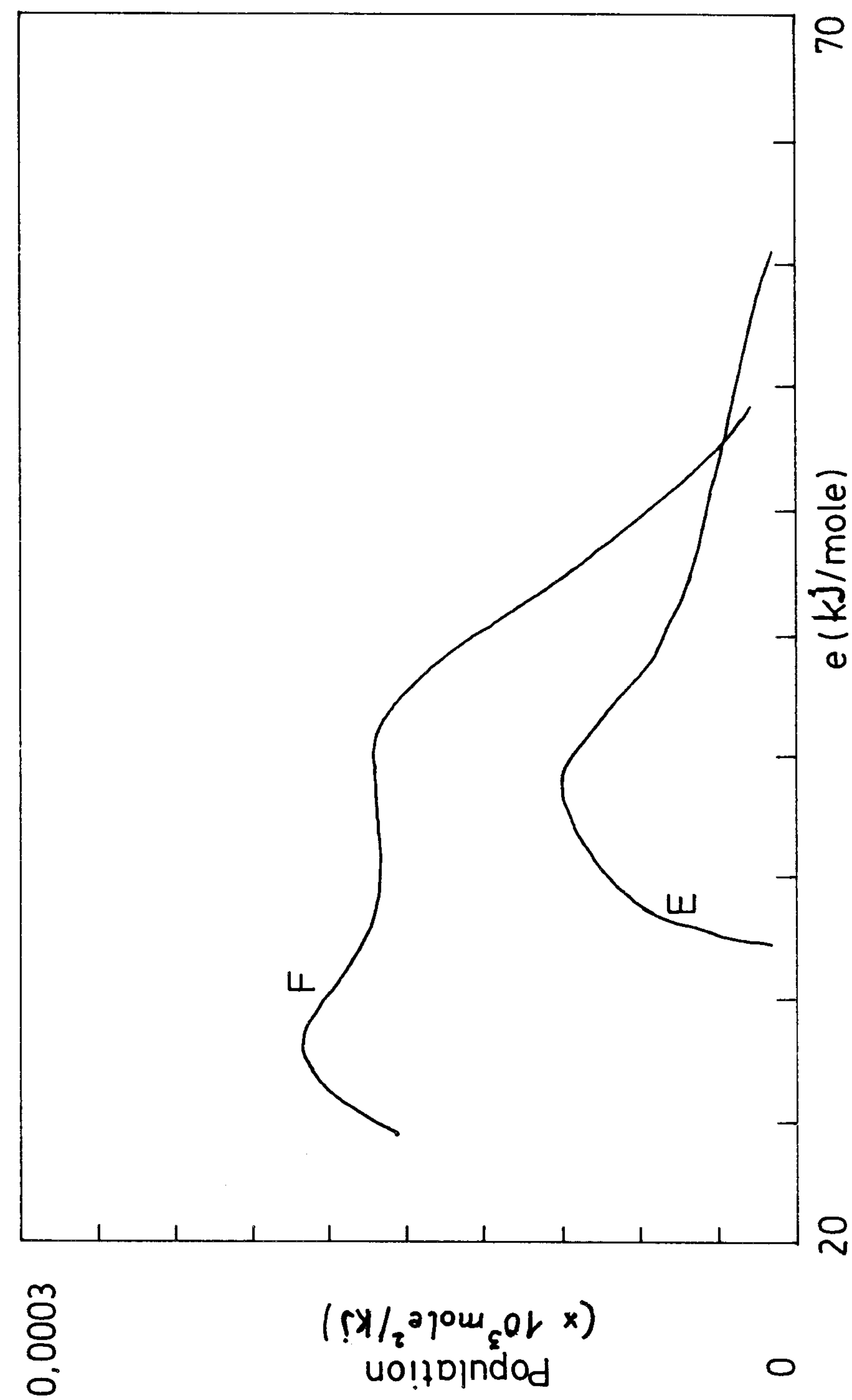

Fig 7a

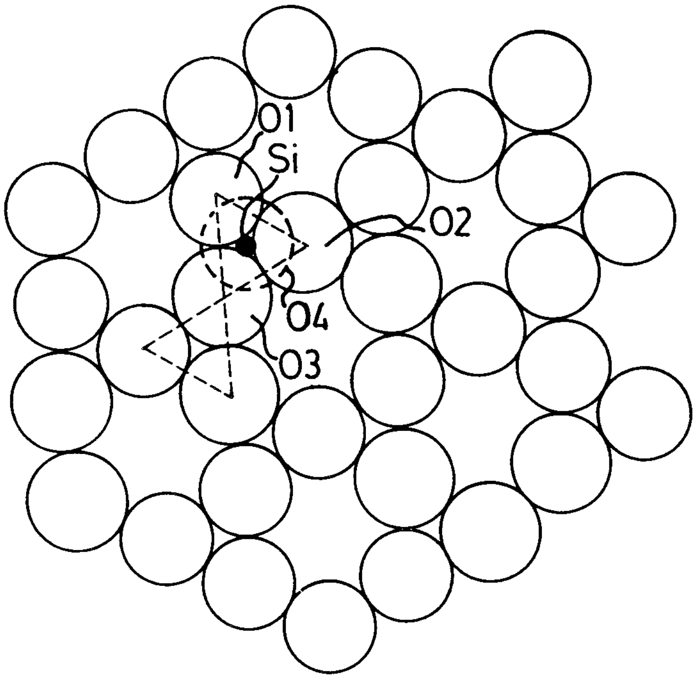


Fig 7b

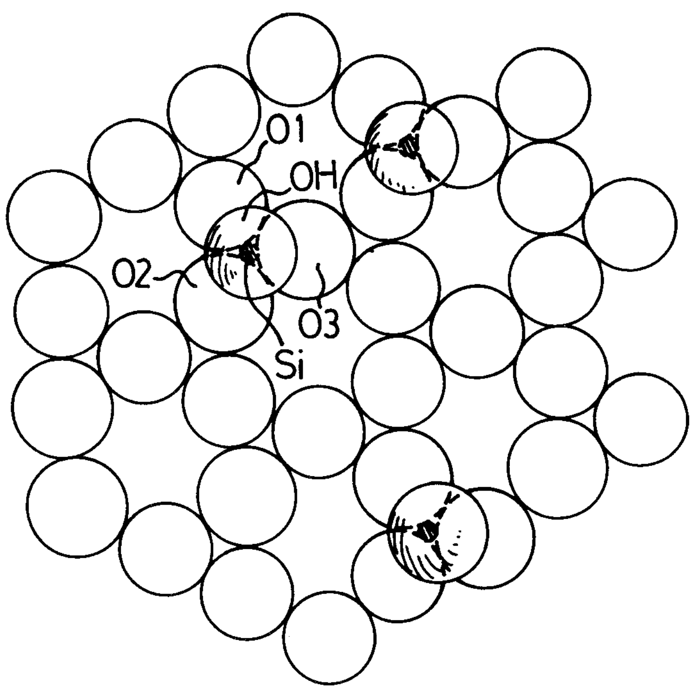

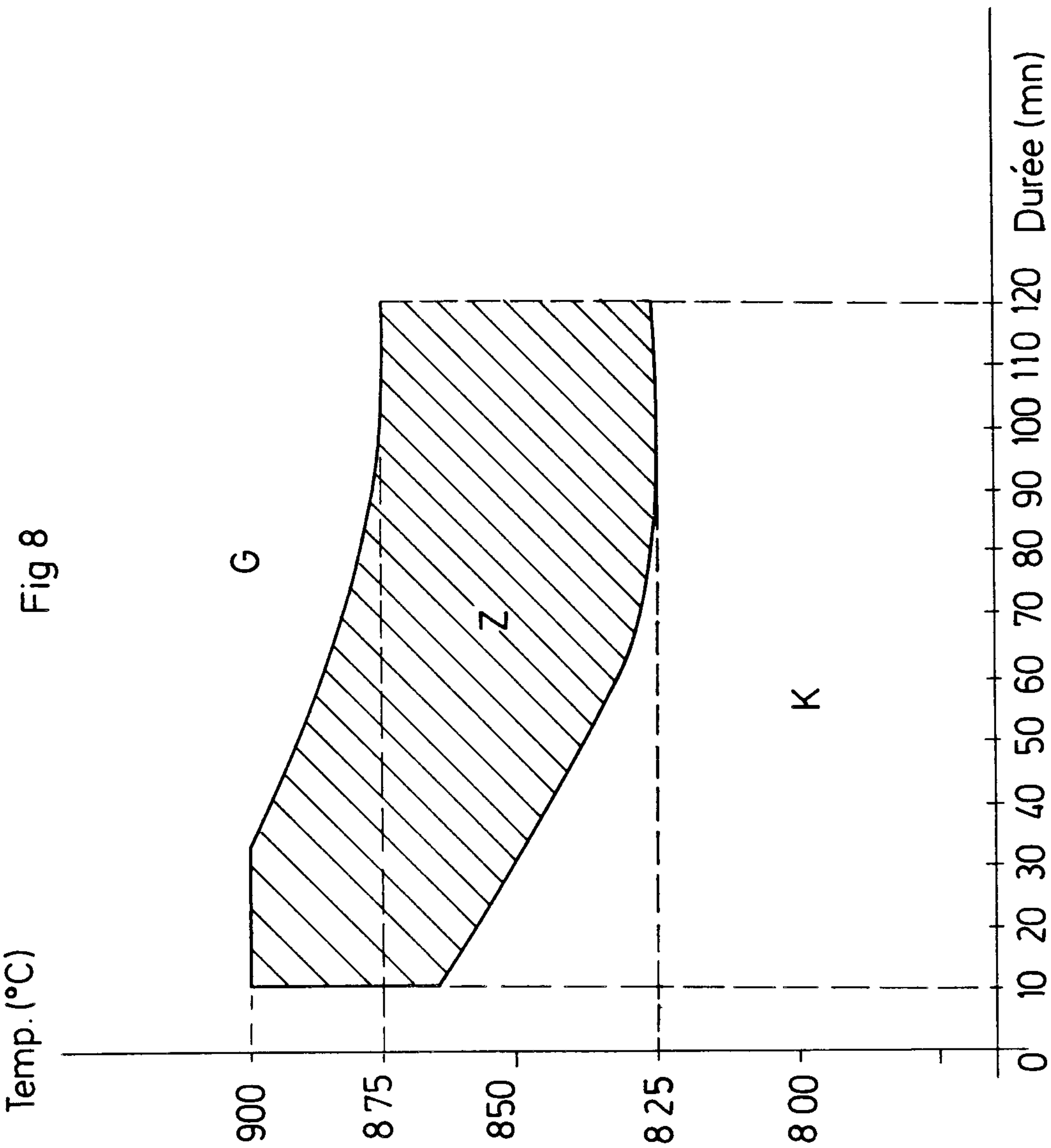
Temp. (°C)
900
875
850
825
800
G
Z
K
0
10
20
30
40
50
60
70
80
90
100
110
120
Durée (mn)

Fig 8

Fig 9

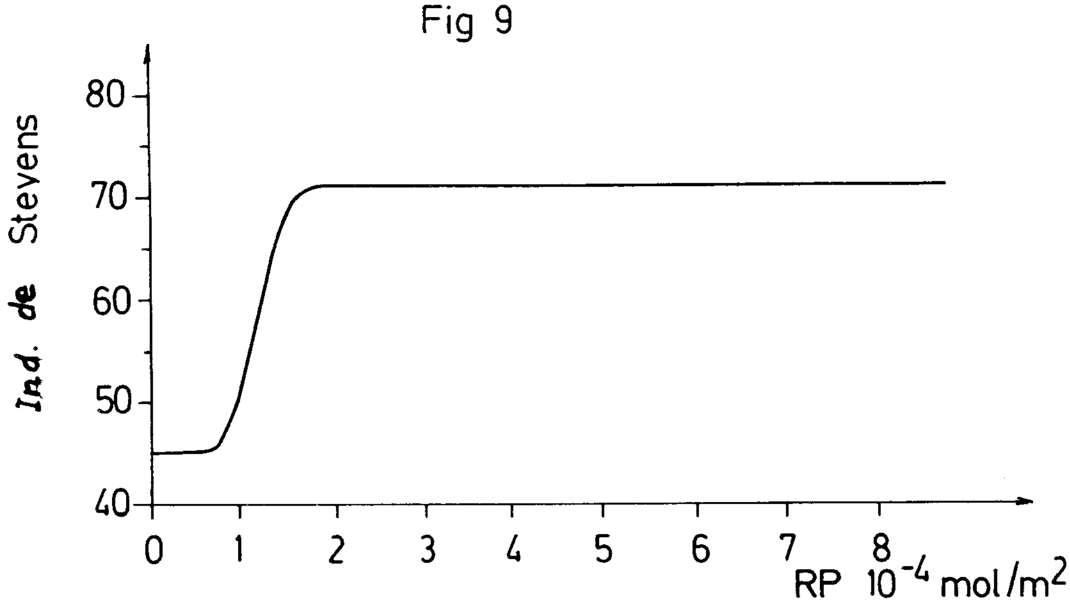

80
70
60
50
40
Ind. de Stevens
0
1
2
3
4
5
6
7
8
RP $10^{-4}$ mol/$m^2$


Fig 10

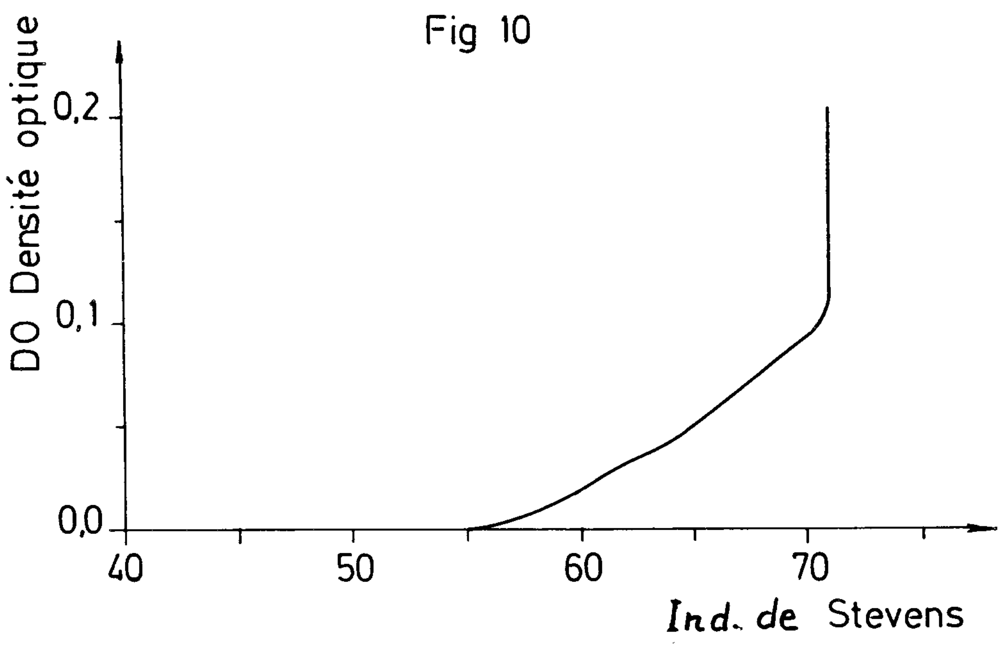

0,2
0,1
0,0
DO Densité optique
40
50
60
70
Ind. de Stevens

Fig 11a

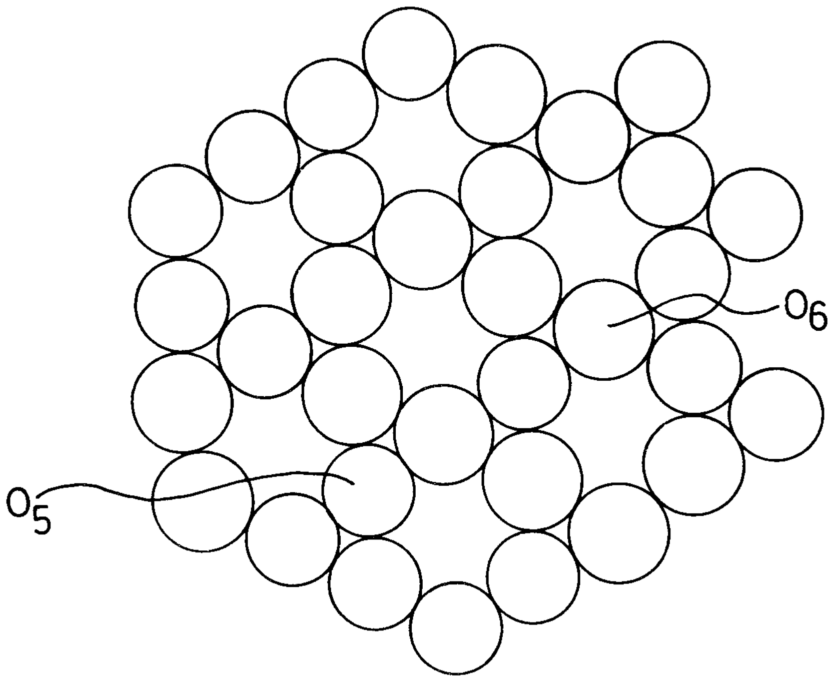


Fig 11b

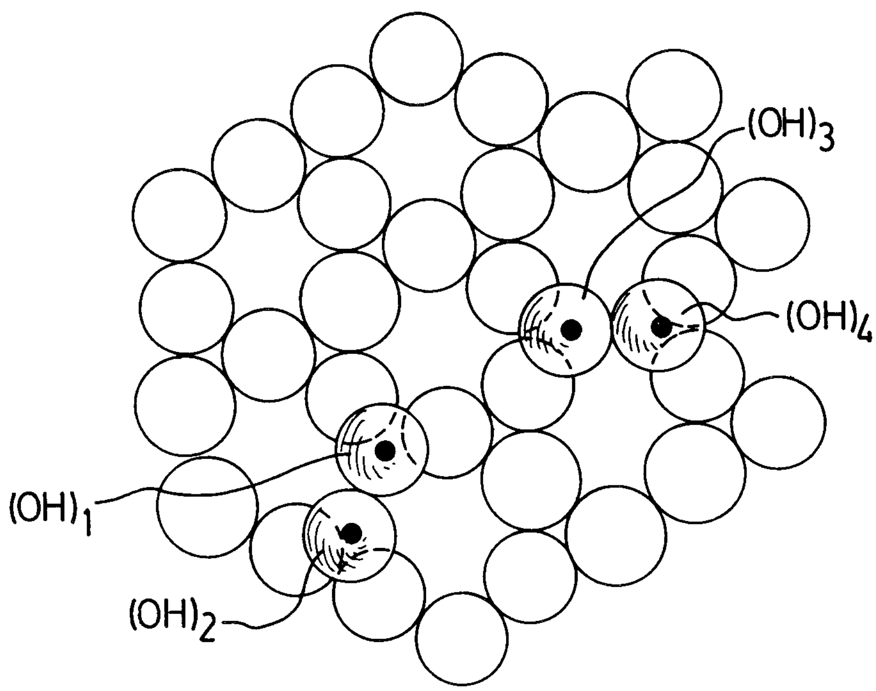

Office européen des brevets

# RAPPORT DE RECHERCHE EUROPEENNE

Numero de la demande

EP 92 20 0508

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | GB-A-2 211 493 (ASADA MILL CO.)<br>* page 5, ligne 6 - ligne 20 *<br>--- | 1 | C09C1/28<br>C01B33/22 |
| X | CHEMICAL ABSTRACTS, vol. 111, no. 26, 25 Décembre 1989, Columbus, Ohio, US;<br>abstract no. 236090R,<br>page 180 ;<br>& JP-A-01131018 (ASADA SEIFUN K.K.) 23.05.1989<br>* abrégé *<br>--- | 1 | |
| X | EP-A-0 050 936 (ENGLISH CLAYS LOVERING POCHIN & CO.)<br>* page 2, ligne 12 - ligne 20; revendication 1 *<br>--- | 1 | |
| A | FR-A-2 585 691 (TALCS DE LUZENAC)<br>--- | | |
| A | US-A-3 366 501 (R.S. LAMAR)<br>--- | | |
| A | GB-A-1 174 460 (GEORGIA KAOLIN CO.)<br>----- | | |

| DOMAINES TECHNIQUES RECHERCHES (Int. Cl.5) |
|---|
| C09C<br>C01B |

Le présent rapport a été établi pour toutes les revendications

| Lieu de la recherche | Date d'achèvement de la recherche | Examinateur |
|---|---|---|
| LA HAYE | 15 JUIN 1992 | VAN BELLINGEN I. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)